# EUROPEAN PATENT APPLICATION

(11) **EP 3 279 491 A1**
(43) Date of publication of application: **07.02.2018**
(21) Application number: 15887875.1
(22) Date of filing: 08.10.2015
(51) Int. Cl.: F16D 3/22

(54) **BALL-TYPE CROSS GROOVE JOINT**

(30) Priority: 31.03.2015 KR 20150045026
(71) Applicant: Hyundaiwia Corporation, Changwon-si, Gyeongsangnam-do 51533 (KR)
(72) Inventor: KIM, Pil Ki, Seoul 02407 (KR)
(74) Representative: Grünecker Patent- und Rechtsanwälte PartG mbB
(86) International application number: PCT/KR2015/010686
(87) International publication number: WO 2016/159467

(57) **Abstract**

A ball-type cross groove joint may include: an outer race rotated by rotation power received from an engine, and having a plurality of ball grooves formed on an inner surface thereof; an inner race installed in the outer race, and having an equal number of ball grooves to those of the outer race, the ball grooves being formed on an outer surface thereof; a plurality of balls transferring the rotation power of the outer race to the inner race; and a cage having a plurality of cage windows each supporting two balls among the plurality of balls.

## Description

### [Technical Field]

The present invention relates to a ball-type cross groove joint, and more particularly, to a ball-type cross groove joint which is capable of improving torque transfer efficiency while maintaining a self-centering feature.

### [Background Art]

In general, a joint refers to a part for transferring rotation power (torque) to rotating shafts having different angles from each other. A hook joint, flexible joint or the like is used for a propeller shaft having a small power transfer angle, and a constant velocity joint is used for a driving shaft having a large power transfer angle.

Since the constant velocity joint can smoothly transfer power at a constant velocity even when the intersection angle between the driving shaft and the driven shaft is large, the constant velocity joint is mainly used for an independent suspension-type driving shaft. Furthermore, a tripod-type constant velocity joint or sliding ball-type constant velocity joint is used for a transmission side (inboard side), and a fixed ball-type constant velocity joint is mainly used for a wheel side (outboard side).

A cross groove joint which is a kind of sliding ball-type constant velocity joint is applied only to a transmission in a driving shaft of a front-wheel-drive vehicle, but applied to both a transmission and wheels in a driving shaft of a rear-wheel-drive vehicle.

The related art is disclosed in Korean Patent Publication No. 2013-0016568 published on February 18, 2013 and entitled "Cross groove-type constant velocity joint".

### [Disclosure]

### [Technical Problem]

Embodiments of the present invention are directed to a ball-type cross groove joint capable of improving torque transfer efficiency while maintaining a self centering feature.

### [Technical Solution]

In an embodiment, a ball-type cross groove joint may include: an outer race rotated by rotation power received from an engine, and having a plurality of ball grooves formed on an inner surface thereof; an inner race installed in the outer race, and having an equal number of ball grooves to those of the outer race, the ball grooves being formed on an outer surface thereof; a plurality of balls transferring the rotation power of the outer race to the inner race; and a cage having a plurality of cage windows each supporting two balls among the plurality of balls.

The number of the ball grooves formed on the inner surface of the outer race may be 12, the ball grooves may constitute six pairs while each two of the balls grooves form a pair, and a pair of ball grooves and another pair of ball grooves adjacent to the pair of ball grooves may be inclined at a skew angle in the opposite directions to each other, based on a joint axis line.

Among the six pairs of ball grooves formed on the inner surface of the outer race, three pairs of ball grooves may have a positive skew angle, and the other three pairs of ball grooves may have a negative skew angle.

Each of the balls may come in contact with the inner surface of the outer race at both sides of a virtual straight line connecting the joint center to the center of the ball.

The ball may come in contact with the inner surface of the outer race at left and right symmetrical positions with respect to the virtual straight line connecting the joint center to the center of the ball.

The number of the ball grooves formed on the outer surface of the inner race may be 12, the ball grooves may constitute six pairs while each two of the balls grooves form a pair, and a pair of ball grooves and another pair of ball grooves adjacent to the pair of ball grooves may be inclined at a skew angle in the opposite directions to each other, based on the joint axis line.

The six pairs of ball grooves formed on the outer surface of the inner race and the six pairs of ball grooves formed on the inner surface of the outer race may face each other, and be inclined in the opposite directions to each other, based on the joint axis line.

Among the six pairs of ball grooves formed on the outer surface of the inner race, three pairs of ball grooves may have a positive skew angle, and the other three pairs of ball grooves may have a negative skew angle.

Each of the balls may come in contact with the outer surface of the inner race at both sides of a virtual straight line connecting the joint center to the center of the ball.

The ball may come in contact with the outer surface of the inner race at left and right symmetrical positions with respect to the virtual straight line connecting the joint center to the center of the ball.

An angle between the centers of a pair of balls based on the joint center may be smaller than an angle between the centers of balls based on the joint center, the balls being adjacent to each other between a pair of balls and another pair of balls adjacent thereto.

### [Advantageous Effects]

In accordance with the embodiment of the invention, since each of the balls not only maintains the contact with the outer surface of the inner race but also maintains the contact with the inner surface of the outer race, the ball-type cross groove joint can transfer torque to all of the balls regardless of the torque transfer direction, thereby improving the torque transfer efficiency.

Furthermore, since an axial component force of a pair of balls and an axial component force of another pair of balls adjacent to the pair of balls are generated in the opposite directions to each other, the ball component forces may not be concentrated on one side but balanced with each other. Thus, the ball-type cross groove joint can maintain a self centering feature while preventing the balls from being stuck.

Furthermore, the load of each of the balls can be reduced to decrease the frictional force between the ball and the ball groove of the outer race and the frictional force between the ball and the ball groove of the inner race, which makes it possible to reduce the torque loss rate.

Furthermore, since a movement along the joint axis line is prevented, the operation stability can be secured.

### [Description of Drawings]

FIG. 1 is a front view of a ball-type cross groove joint in accordance with an embodiment of the present invention.
FIG. 2 is a cross-sectional view taken along the line A-A of FIG. 1.
FIG. 3 is a cross-sectional view taken along the line B-B of FIG. 2.
FIG. 4 is a cross-sectional view taken along the line R-R of FIG. 3.
FIG. 5 is a cross-sectional view taken along the line L-L of FIG. 3.
FIG. 6 is a view seen from a direction R of FIG. 3.
FIG. 7 is a view seen from a direction L of FIG. 3.
FIG. 8 is a perspective view of an outer race of the ball-type cross groove joint in accordance with the embodiment of the present invention.
FIG. 9 is a perspective view of an inner race of the ball-type cross groove joint in accordance with the embodiment of the present invention.
FIG. 10 is a perspective view of a cage of the ball-type cross groove joint in accordance with the embodiment of the present invention.
FIG. 11 illustrates that a ball comes in contact with the outer surface of the inner race in the ball-type cross groove joint in accordance with the embodiment of the present invention.
FIG. 12 illustrates that a ball comes in contact with the outer surface of the outer race in the ball-type cross groove joint in accordance with the embodiment of the present invention.
FIG. 13 is a graph comparatively illustrating an axial component force of the ball-type cross groove joint in accordance with the embodiment of the present invention.
FIG. 14 is a graph comparatively illustrating a torque loss rate of the ball-type cross groove joint in accordance with the embodiment of the present invention.
FIG. 15 is a graph illustrating ball component forces of the ball-type cross groove joint in accordance with the embodiment of the present invention.
FIG. 16 is a graph illustrating movement of the joint center of the ball-type cross groove joint in accordance with the embodiment of the present invention.

### [Best Mode]

Embodiments of the invention will hereinafter be described in detail with reference to the accompanying drawings. It should be noted that the drawings are not to precise scale and may be exaggerated in thickness of lines or sizes of components for descriptive convenience and clarity only.

Furthermore, the terms as used herein are defined by taking functions of the invention into account and can be changed according to the custom or intention of users or operators. Therefore, definition of the terms should be made according to the overall disclosures set forth herein.

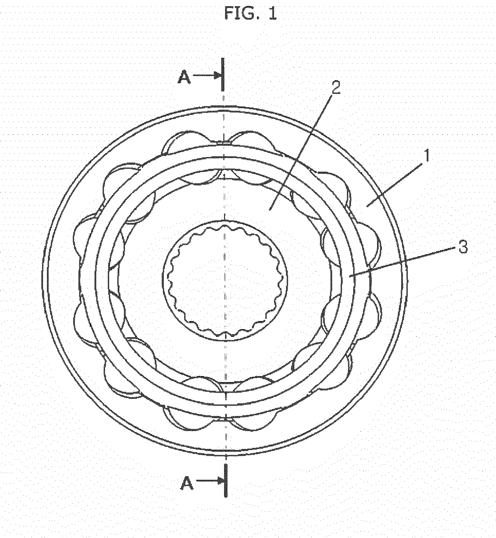

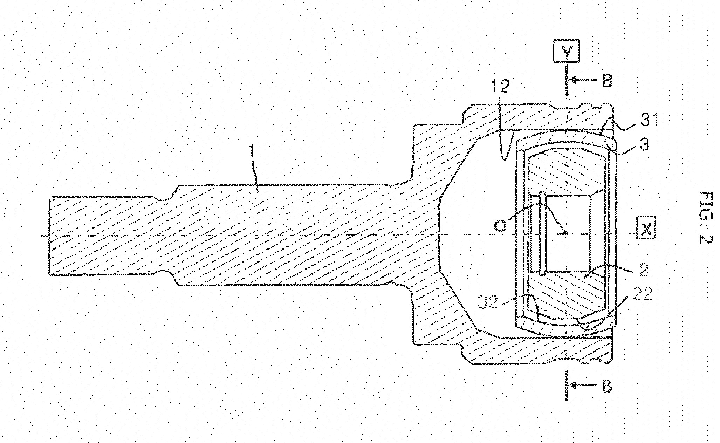

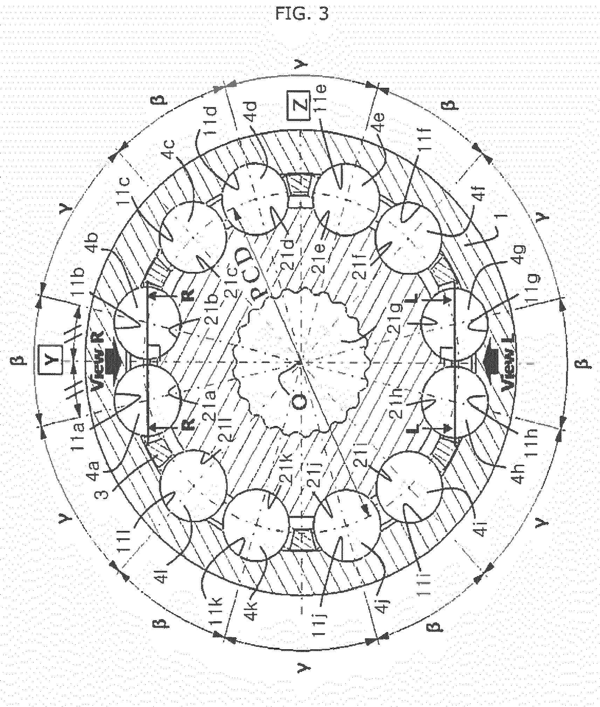

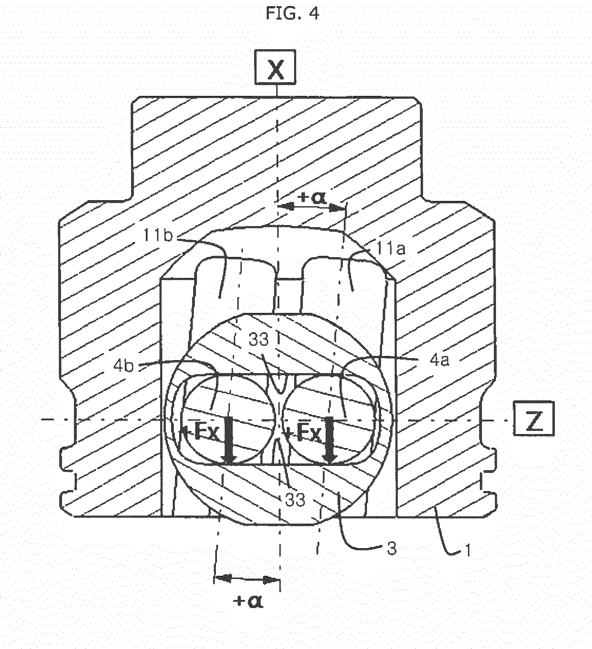

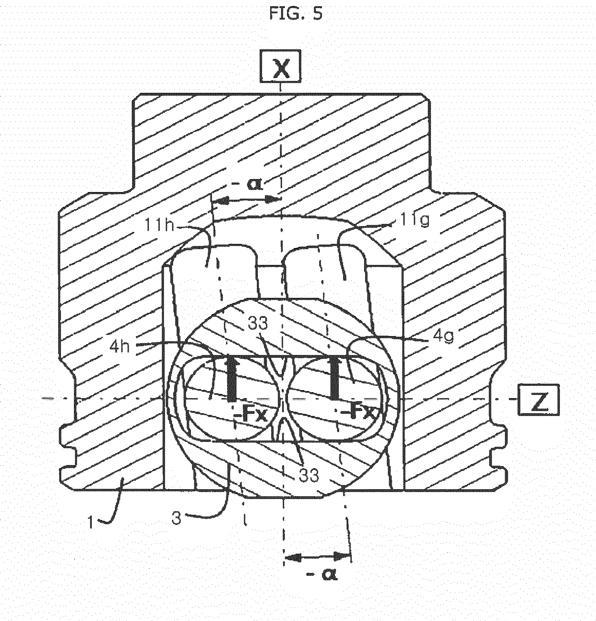

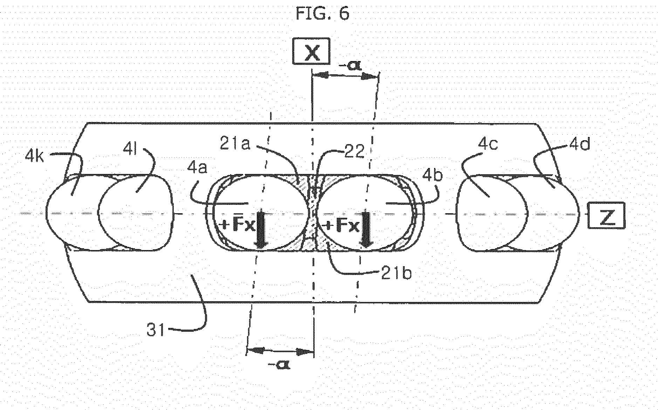

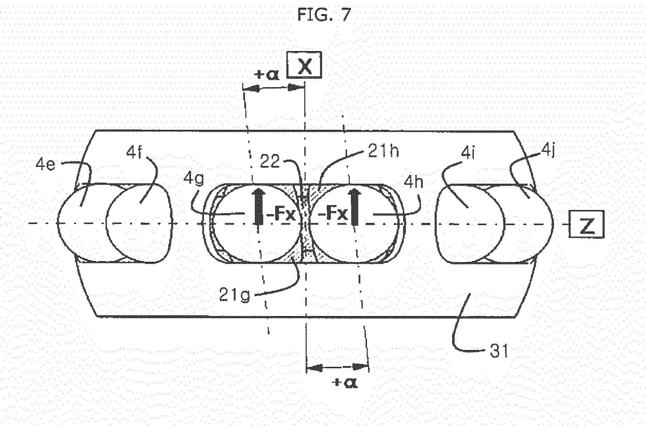

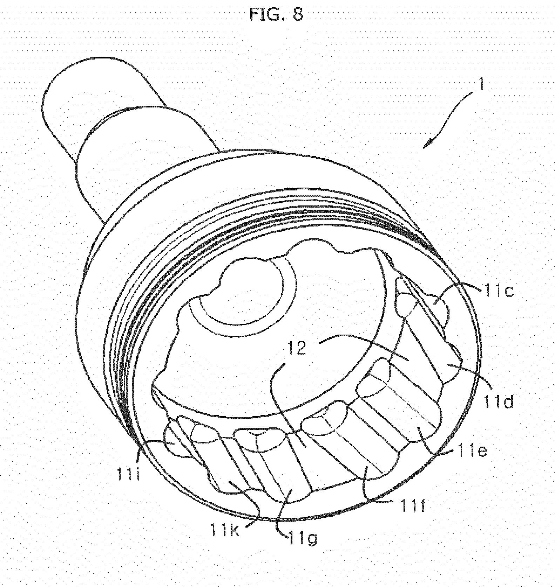

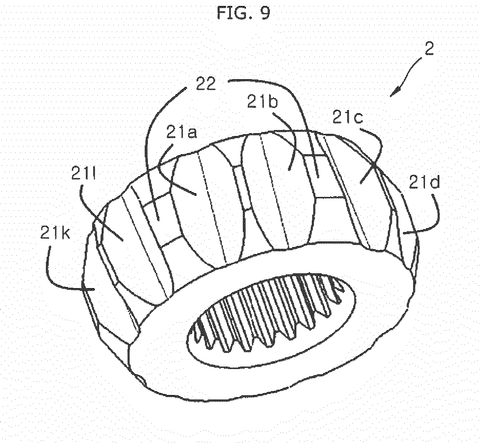

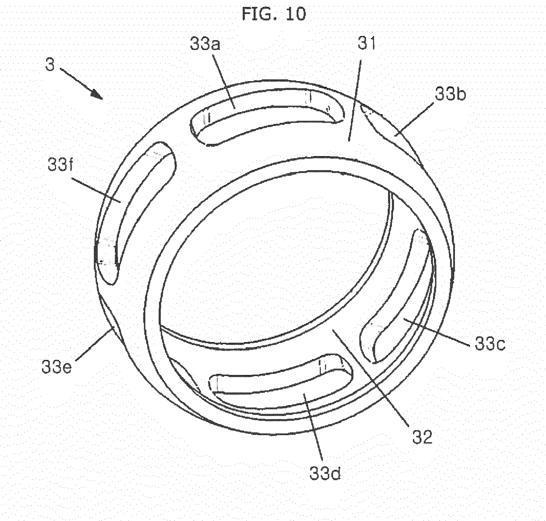

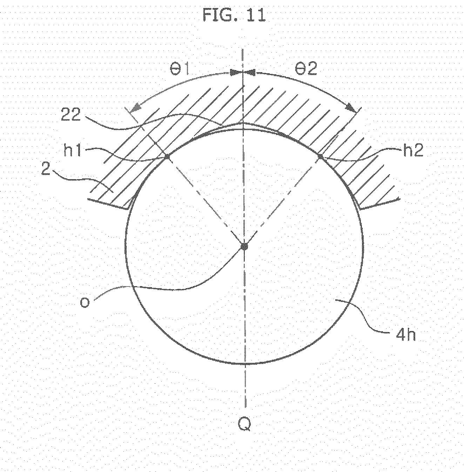

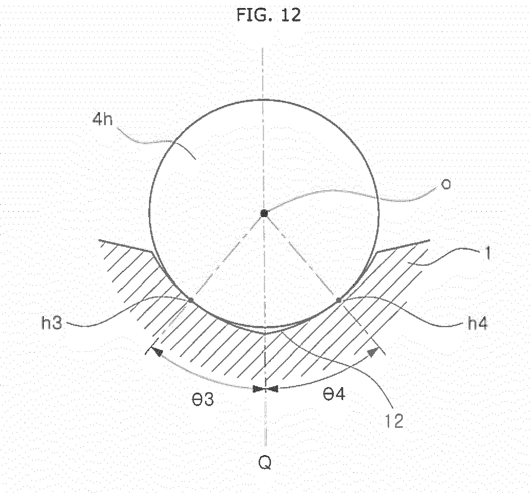

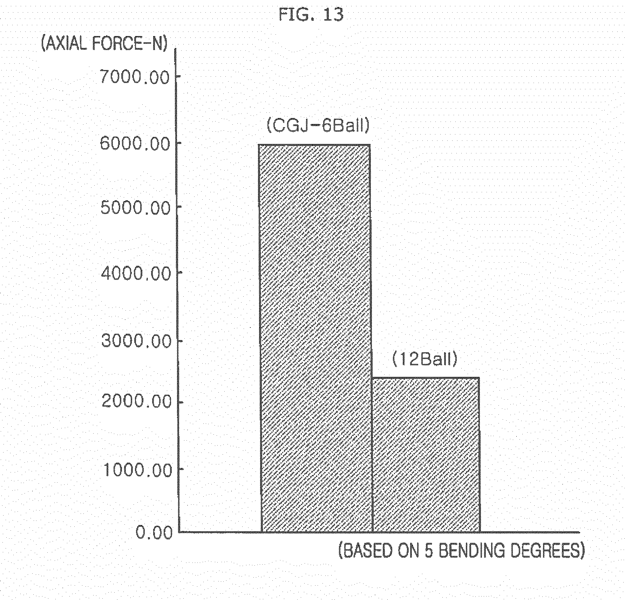

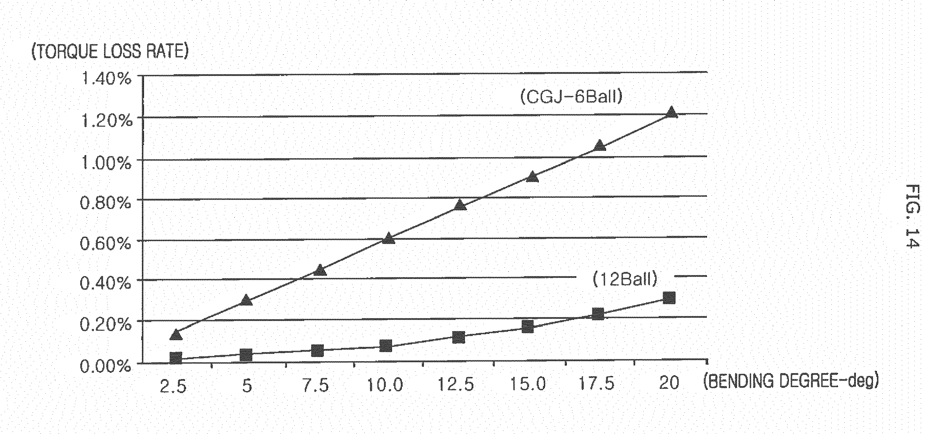

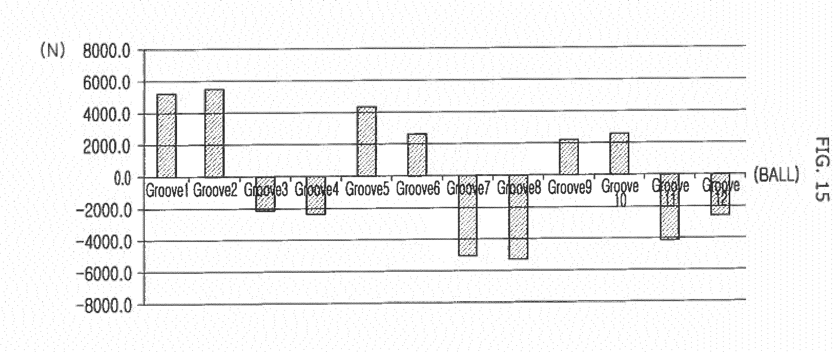

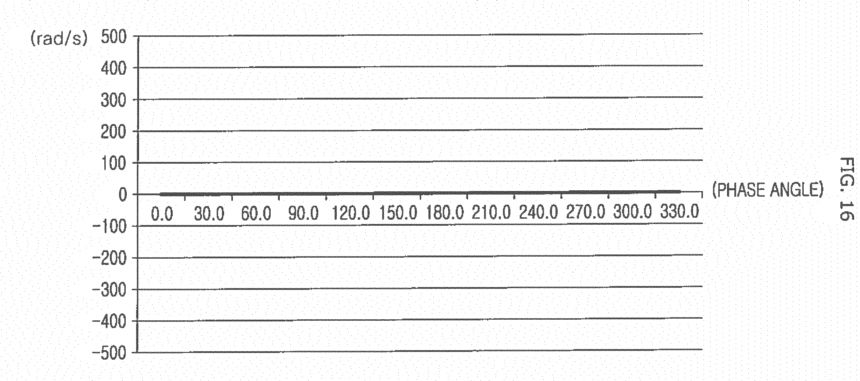

FIG. 1 is a front view of a ball-type cross groove joint in accordance with an embodiment of the present invention, FIG. 2 is a cross-sectional view taken along the line A-A of FIG. 1, FIG. 3 is a cross-sectional view taken along the line B-B of FIG. 2, FIG. 4 is a cross-sectional view taken along the line R-R of FIG. 3, FIG. 5 is a cross-sectional view taken along the line L-L of FIG. 3, FIG. 6 is a view seen from a direction R of FIG. 3, and FIG. 7 is a view seen from a direction L of FIG. 3. FIG. 8 is a perspective view of an outer race of the ball-type cross groove joint in accordance with the embodiment of the present invention, FIG. 9 is a perspective view of an inner race of the ball-type cross groove joint in accordance with the embodiment of the present invention, and FIG. 10 is a perspective view of a cage of the ball-type cross groove joint in accordance with the embodiment of the present invention. FIG. 11 illustrates that a ball comes in contact with the outer surface of the inner race in the ball-type cross groove joint in accordance with the embodiment of the present invention, and FIG. 12 illustrates that a ball comes in contact with the outer surface of the outer race in the ball-type cross groove joint in accordance with the embodiment of the present invention. FIG. 13 is a graph comparatively illustrating an axial component force of the ball-type cross groove joint in accordance with the embodiment of the present invention, FIG. 14 is a graph comparatively illustrating a torque loss rate of the ball-type cross groove joint in accordance with the embodiment of the present invention, FIG. 15 is a graph illustrating ball component forces of the ball-type cross groove joint in accordance with the embodiment of the present invention, and FIG. 16 is a graph illustrating movement of the joint center of the ball-type cross groove joint in accordance with the embodiment of the present invention.

Referring to FIGS. 1 to 7, the ball-type cross groove joint in accordance with the embodiment of the present invention may include an outer race 1, an inner race 2, balls and a cage 3.

The outer race 1 may be rotated by rotation power received from an engine, and have a plurality of ball grooves formed on the inner surface 12. In the present embodiment, the outer race 1 may have 12 ball grooves 11a, 11b, 11c, 11d, 11e, 11f, 11g, 11h, 11i, 11j, 11k and 111. The inner surface 12 of the outer race 1 may be formed in a cylindrical shape having an inner diameter based on a joint axis line X.

The inner race 2 may be installed in the outer race 1, and have an equal number of ball grooves to those of the outer race 1, the ball grooves being formed on the outer surface 22 of the inner race 2. In the present embodiment, the inner race 2 may have 12 ball grooves 21a, 21b, 21c, 21d, 21e, 21f, 21g, 21h, 21i, 21j, 21k and 21l. The outer surface 22 of the inner race 2 may be formed in a cylindrical shape or cone shape.

The balls may transfer rotation power of the outer race 1 to the inner race 2. In the present embodiment, 12 balls 4a, 4b, 4c, 4d, 4e, 4f, 4g, 4h, 4i, 4j, 4k and 41 may be formed.

The cage 3 may have a plurality of cage windows each supporting two balls. In the present embodiment, since the ball-type cross groove joint includes 12 balls 4a to 4l, six cage windows 33a, 33b, 33c, 33d, 33e and 33f may be formed in the cage 3.

The 12 ball grooves 11a to 11l formed on the inner surface 12 of the outer race 1 may constitute a total of six ball groove pairs (six pairs of ball grooves) while each of the ball grooves and another adjacent ball groove form a pair.

The pair of ball grooves 11a and 11b illustrated in FIGS. 3 and 4 and the pair of ball grooves 11g and 11h illustrated in FIGS. 3 and 5 may be inclined at a skew angle α on one plane R-R or L-L.

Specifically, the pair of ball grooves 11a and 11b and another pair of ball grooves 11c and 11d adjacent to the pair of ball grooves 11a and 11b may have the skew angle α in the opposite directions to each other, based on the joint axis line X. Thus, among the six pairs of ball grooves formed on the inner surface 12 of the outer race 1, three pairs of ball grooves 11a and 11b, 11e and 11f, and 11f and 11j may have a positive skew angle α, and the other three pairs of ball grooves 11c and 11d, 11g and 11h, and 11k and 11l may have a negative skew angle α.

Referring to FIGS. 3 to 12, the ball 4h may come in contact with the inner surface 12 of the outer race 1 at both sides of a virtual straight line Q connecting the joint center O to the center o of the ball 4h. Specifically, the ball 4h may come in contact with the inner surface 12 of the outer race 1 at a point h3 in the left side of the virtual straight line Q (based on FIG. 12), and simultaneously come in contact with the inner surface 12 of the outer race 1 at a point h4 of the right side of the virtual straight line Q. Since the points h3 and h4 are positioned symmetrically with respect to the virtual straight line Q, an angle θ3 between the virtual straight line Q and the point h3 based on the center o of the ball 4h may be equal to an angle θ4 between the virtual straight line Q and the point h4. As such, each of the balls 4a to 4l and the inner surface 12 of the outer race 1 can continuously maintain the contact state therebetween.

The 12 ball grooves 21a to 21l formed on the outer surface 22 of the inner race 2 may constitute a total of six ball groove pairs (six pairs of ball grooves) while each of the ball grooves and another adjacent ball groove form a pair. The six pairs of ball grooves formed on the outer surface 22 of the inner race 2 may face the six pairs of ball grooves formed on the inner surface 12 of the outer race 1, respectively, and the balls 4a to 4l may be arranged therebetween.

The pair of ball grooves 21a and 21b illustrated in FIGS. 3 and 6 and the pair of ball grooves 21g and 21h illustrated in FIGS. 3 and 7 may be inclined at a skew angle α on one plane R-R or L-L.

Specifically, the pair of ball grooves 21 and 21b and another pair of ball grooves 21c and 21d adjacent to the pair of ball grooves 21 and 21b may have the skew angle α in the opposite directions to each other, based on the joint axis line X. The pair of ball grooves 21a and 21b formed on the outer surface 22 of the inner race 2 and the pair of ball grooves 11a and 11b formed on the inner surface 12 of the outer race 1 and facing the pair of ball grooves 21a and 21b may also be inclined in the opposite directions to each other, based on the joint axis line X.

Thus, among the six pairs of ball grooves formed on the outer surface 22 of the inner race 2, three pairs of ball grooves 21a and 21b, 21e and 21f, and 21f and 21j may have a negative skew angle α, and the other three pairs of ball grooves 21c and 21d, 21g and 21h, and 21k and 21l may have a positive skew angle α.

Referring to FIGS. 3 to 11, the ball 4h may come in contact with the outer surface 22 of the inner race 2 at both sides of the virtual straight line Q connecting the joint center O to the center o of the ball 4h. Specifically, the ball 4h may come in contact with the outer surface 22 of the inner race 2 at a point h1 in the left side of the virtual straight line Q (based on FIG. 11), and simultaneously come in contact with the outer surface 22 of the inner race 2 at a point h2 in the right side of the virtual straight line Q. Since the points h1 and h2 are positioned symmetrically with respect to the virtual straight line Q, an angle θ1 between the virtual straight line Q and the point h1 based on the center o of the ball 4h may be equal to an angle θ2 between the virtual straight line Q and the point h2. As such, each of the balls 4a to 4l and the outer surface 22 of the inner race 2 can continuously maintain the contact state therebetween.

In accordance with the present embodiment, the balls 4a to 4l may not only maintain the contact with the outer surface 22 of the inner race 2, but also maintain the contact with the inner surface 12 of the outer race 1. Thus, torque can be transferred to all of the balls 4a to 4l regardless of the torque transfer direction.

Referring to FIGS. 2, 6 and 10, the cage 3 may be assembled between the outer race 1 and the inner race 2 such that an outer surface 31 thereof faces the inner surface 12 of the outer race 1 and an inner surface 32 thereof faces the outer surface 22 of the inner race 2. Referring to FIG. 2, the inner surface 12 of the outer race 1 may be formed in a cylindrical shape, and the outer surface 31 of the cage 3 may be formed in a spherical shape. Thus, the cage 3 can be moved or rotated along the joint axis line X.

One cage window 33a may house a pair of balls 4a and 4b, and control the balls 4a and 4b such that the centers of the balls 4a and 4b can be positioned on one plane at all times. The cage 3 may be bent by 1/2 of the bending angle of the inner race 2.

The 12 balls 4a to 4l may be housed in the cage windows 33a to 33f, respectively, while each two of the 12 balls form a pair. Referring to FIG. 3, an angle between the centers of the pair of balls 4a and 4b housed in the cage window 33a based on the joint center O may be represented by β, an angle between any one 4b of the pair of balls 4a and 4b and the ball 4c more adjacent to the ball 4b between another pair of balls 4c and 4d adjacent to the pair of balls 4a and 4b may be represented by γ, and the angle β may be smaller than the angle γ.

Hereafter, the operation principle of the ball-type cross groove joint in accordance with the present embodiment of the present invention will be described as follows.

When rotation power outputted from the engine is transferred to the outer race 1 through the transmission, the rotation power may be transferred to the inner race 2 through the 12 balls 4a to 4l, and rotate a wheel (not illustrated).

At this time, since a pair of ball grooves and another pair of ball grooves adjacent to the pair of ball grooves are inclined at the skew angle α in the opposite directions to each other based on the joint axis line X, joint-axis-line component forces +Fx of three pairs of balls 4a and 4b, 4e and 4f, and 4i and 4j and joint-axis-line component forces -Fx of adjacent three pairs of balls 4c and 4d, 4g and 4h, and 4k and 4l may be generated in the opposite directions. Thus, the ball component forces may not be concentrated to one side, but balanced with each other. Therefore, the ball-type cross groove joint can maintain a self-centering feature that the joint center O is located at the center position.

Since torque is distributed to the 12 balls 4a to 4l, a load per ball can be reduced. The reduction in load of the balls 4a to 4l may serve to decrease the skew angle α for applying operability to the balls 4a to 4l, thereby reducing the joint-axis-line component forces +Fx and -Fx of the balls 4a to 4l. Referring to FIG. 13, the axial component forces of the balls 4a to 4l in accordance with the present embodiment can be significantly reduced in comparison to those of the conventional ball-type cross groove joint. Referring to FIG. 15, the axial component forces of the balls 4a to 4l may be alternately changed in the vertical direction at each pair of balls. When the axial component forces of the balls are concentrated on one side, a bending force in one direction may become superior. In this case, when bending is tried in the other direction, the balls may be stuck. In the present embodiment, however, the axial component forces of the balls may be balanced while being alternately changed in the vertical direction, which makes it possible to prevent the balls 4a to 4l from being stuck.

The reduction in load of the balls 4a to 4l may decrease the frictional force between the balls 4a to 4l and the ball grooves 11a to 11l formed on the inner surface of the outer race 1 and the frictional force between the balls 4a to 4l and the ball grooves 21a to 21l formed on the outer surface 22 of the inner race 2.

Furthermore, the reduction in joint-axis-line component forces +Fx and -Fx of the balls 4a to 4l, caused by the decrease of the skew angle α, can decrease the fictional force between the balls 4a to 4l and the cage windows 33a to 33f for controlling the balls 4a to 4l. The decrease of the frictional force can reduce a motion loss of the balls 4a to 4l, thereby reducing a torque loss rate. FIG. 14 shows that the ball-type cross groove joint in accordance with the present embodiment can significantly reduce the torque loss rate, compared to the conventional ball-type cross groove joint.

Referring to FIG. 16, since the joint center of the ball-type cross groove joint in accordance with the present embodiment is not moved, a movement in the direction of the joint axis line can be prevented. Therefore, the operation stability can be assured.

Furthermore, the three pairs of balls 4a and 4b, 4e and 4f, and 4i and 4j may have joint-axis-line component forces +Fx, and the other three pairs of balls 4c and 4d, 4g and 4h and 4k and 41 may have joint-axis-line component forces -Fx, while they pull in the opposite directions. Therefore, the ball component forces may not be concentrated on one side, but balanced with each other, and the magnitudes of the joint-axis-line component forces +Fx and -Fx can be reduced. Thus, the ball-type cross groove joint can absorb even relatively small vibration.

Although some embodiments have been provided to illustrate the invention in conjunction with the drawings, it will be apparent to those skilled in the art that the embodiments are given by way of illustration only, and that various modifications and equivalent embodiments can be made without departing from the spirit and scope of the invention. The scope of the invention should be limited only by the accompanying claims.

## Claims

1. A ball-type cross groove joint comprising:
an outer race rotated by rotation power received from an engine, and having a plurality of ball grooves formed on an inner surface thereof;
an inner race installed in the outer race, and having an equal number of ball grooves to those of the outer race, the ball grooves being formed on an outer surface thereof;
a plurality of balls transferring the rotation power of the outer race to the inner race; and
a cage having a plurality of cage windows each supporting two balls among the plurality of balls.

2. The ball-type cross groove joint of claim 1, wherein the number of the ball grooves formed on the inner surface of the outer race is 12, the ball grooves constitute six pairs while each two of the balls grooves form a pair, and a pair of ball grooves and another pair of ball grooves adjacent to the pair of ball grooves are inclined at a skew angle in the opposite directions to each other, based on a joint axis line.

3. The ball-type cross groove joint of claim 2, wherein among the six pairs of ball grooves formed on the inner surface of the outer race, three pairs of ball grooves have a positive skew angle, and the other three pairs of ball grooves have a negative skew angle.

4. The ball-type cross groove joint of claim 2, wherein each of the balls comes in contact with the inner surface of the outer race at both sides of a virtual straight line connecting a joint center to a center of the ball.

5. The ball-type cross groove joint of claim 4, wherein the ball comes in contact with the inner surface of the outer race at left and right symmetrical positions with respect to the virtual straight line connecting the joint center to the center of the ball.

6. The ball-type cross groove joint of claim 2, wherein the number of the ball grooves formed on the outer surface of the inner race is 12, the ball grooves constitute six pairs while each two of the balls grooves form a pair, and a pair of ball grooves and another pair of ball grooves adjacent to the pair of ball grooves are inclined at a skew angle in the opposite directions to each other, based on the joint axis line.

7. The ball-type cross groove joint of claim 6, wherein the six pairs of ball grooves formed on the outer surface of the inner race and the six pairs of ball grooves formed on the inner surface of the outer race face each other, and are inclined in the opposite directions to each other, based on the joint axis line.

8. The ball-type cross groove joint of claim 7, wherein among the six pairs of ball grooves formed on the outer surface of the inner race, three pairs of ball grooves have a positive skew angle, and the other three pairs of ball grooves have a negative skew angle.

9. The ball-type cross groove joint of claim 6, wherein each of the balls comes in contact with the outer surface of the inner race at both sides of a virtual straight line connecting a joint center to a center of the ball.

10. The ball-type cross groove joint of claim 9, wherein the ball comes in contact with the outer surface of the inner race at left and right symmetrical positions with respect to the virtual straight line connecting the joint center to the center of the ball.

11. The ball-type cross groove joint of claim 1, wherein an angle between centers of a pair of balls based on a joint center is smaller than an angle between the centers of balls based on the joint center, the balls being adjacent to each other between a pair of balls and another pair of balls adjacent thereto.
